# EUROPÄISCHE PATENTSCHRIFT

(11) **EP 3 100 848 B1**
(45) Veröffentlichungstag und Bekanntmachung des Hinweises auf die Patenterteilung: **11.09.2019**
(21) Anmeldenummer: 16172847.2
(22) Anmeldetag: 03.06.2016
(51) Int. Cl.: B29C 70/54, B29C 70/46, B29C 70/88, B26F 1/14, B29L 31/00, B29C 43/02, B26F 1/44

(54) **FASERKUNSTSTOFFVERBUND-BAUTEIL MIT VERDICHTETEN FASERN UND VERFAHREN ZU DESSEN HERSTELLUNG**
FIBER PLASTIC COMPOSITE COMPONENT WITH COMPACTED FIBRES AND METHOD FOR PRODUCING SAME
COMPOSANT COMPOSITE RENFORCE PAR DES FIBRES COMPRENANT DES FIBRES COMPRIMEES ET SON PROCEDE DE PRODUCTION

(30) Priorität: 03.06.2015 DE 102015108850
(43) Veröffentlichungstag der Anmeldung: 07.12.2016
(73) Patentinhaber: Weberit Werke Dräbing GmbH, 57641 Oberlahr (DE)
(72) Erfinder: Dräbing, Norbert, 56587 Oberraden (DE)
(74) Vertreter: MFG Patentanwälte Meyer-Wildhagen Meggle-Freund Gerhard PartG mbB

(56) Entgegenhaltungen:
- DE-A1- 4 214 636
- US-A- 4 098 142
- US-B2- 8 951 455

## Beschreibung

### GEBIET DER ERFINDUNG

Die vorliegende Erfindung betrifft ein Faserkunststoffverbund-Bauteil (FKV-Bauteil) mit einer Kunststoffmatrix und einer darin eingebetteten Faserstruktur und einer Fügeöffnung zur Aufnahme eines das FKV-Bauteil durchsetzenden Verbindungsmittels.

### HINTERGRUND DER ERFINDUNG

Faserkunststoffverbunde (FKV) werden zunehmend in vielen Bereichen des Fahrzeug-Maschinen- und Anlagenbaus sowie in der Luftfahrt eingesetzt. Sie weisen hohe spezifische mechanische Kennwerte und gezielt einstellbare Materialeigenschaften auf. FKV spielen auch eine große Rolle bei sogenannten hybriden Strukturen, bei denen metallische Bauteile mit FKV-Bauteilen verbunden werden. Dabei werden stoffschlüssige Fügesysteme (z.B. Verkleben) aber auch die klassischen formbeziehungsweise kraftschlüssigen Fügesysteme verwendet, wie sie beispielsweise über Schrauben-, Niet- bzw. Bolzenverbindungen realisiert werden.

Im Gegensatz zu den meisten metallischen Werkstoffen weisen jedoch FKV inhomogene, von der Belastungsrichtung abhängige Werkstoff- und Festigkeitseigenschaften auf. So sind zum Beispiel bei plattenförmigen FKV-Bauteilen, die eine Kunststoffmatrix umfassen, in die mehr oder weniger ebene, zur Plattenoberfläche parallel angeordnete Faserstrukturen eingebettet sind, quer zur Faserrichtung, das heißt quer zur Plattenoberfläche, oft nur eingeschränkt belastbar. Insbesondere wird die Druckfestigkeit hier maßgeblich durch die Werkstoffeigenschaften der vergleichsweise weichen Kunststoffmatrix bestimmt.

Bei Schraub- oder Nietverbindungen können vergleichsweise hohe Flächenpressungen an den FKV-Oberflächen im Bereich der Schraub- und Nietköpfe auftreten. Diese Druckkräfte können - insbesondere bei Wechselbeanspruchungen - zu lokalen Überlastungen und/oder zu Fließeffekten in der Kunststoffmatrix des FKV-Bauteils führen, die zunächst die Verbindungsfestigkeit herabsetzen und nach einiger Zeit sogar zu einem Bauteilversagen führen können.

Ein Ansatz zur Lösung dieses Problems besteht darin, vergrößerte Auflageflächen im Bereich der Lastübertragungspunkte zu realisieren. Dadurch wird aber der Platzbedarf für entsprechende Verbindungsmittel erhöht.

Aus der DE 10 2011 119 251 A1 ist eine Vorrichtung zur Krafteinleitung in ein FKV-Bauteil mittels einer Schraubverbindung bekannt, bei dem die Haltbarkeit der Schraubverbindung über eine das FKV-Bauteil durchsetzende Buchsen-Hülsenanordnung erhöht werden soll, so dass die Schraub- und Betriebslasten belastungsreduziert in das FKV-Bauteil übertragen werden. Bei diesem Ansatz sind zusätzliche, gewichtserhöhende und aufwendige Bauteile erforderlich.

Es gibt Ansätze, bei denen eine verdichtete Faserstruktur in einem Fügebereich vorgesehen ist. So zeigt beispielsweise US 8,951,455 B2 ein Herstellungsverfahren für einen Fügebereich, bei dem eine verdichtete Faserstruktur um eine Fügeöffnung herum angeordnet ist.

Eine ähnliche Anordnung ist auch aus der US 4,098,142 A bekannt, bei der durch Verdrängung einer Gewebestruktur Fasern in einem Fügebereich verdichtet werden.

Etwas Ähnliches ergibt sich auch aus der DE 42 14 636 A1, bei der Fasern um Aufnahmelöcher herum in verdichteter Ausführung angeordnet sind. Bei diesem Verfahren findet jedoch eine vergleichsweise geringe Verdichtung im vorhandenen Matrixvolumen statt.

Aufgabe der vorliegenden Erfindung ist es daher, ein verbessertes FKV-Bauteil zur Verfügung zu stellen, bei dem diese Nachteile wenigstens teilweise ausgeräumt sind. Insbesondere besteht auch die Aufgabe ein FKV-Bauteil bereitzustellen, welches für eine Vorrichtung zur Krafteinleitung mittels einer Schraubverbindung und/oder einer Nietverbindung geeignet ist. Eine weitere Aufgabe besteht darin ein Verfahren zur Herstellung eines solchen FKV-Bauteils zur Verfügung zu stellen.

### ZUSAMMENFASSUNG DER ERFINDUNG

Der Gegenstand der vorliegenden Erfindung ist ein FKV-Bauteil, gemäß den Merkmalen des Anspruchs 1.

Wie oben dargestellt, besteht eines der Hauptprobleme bei Schraubverbindungen an und mit FKV-Bauteilen darin, dass insbesondere die Druckfestigkeit der Kunststoffmatrix für die auftretenden Belastungen oft nicht ausreicht (fließen, Überlastungen). Dies gilt insbesondere im Zusammenhang mit metallischen Verbindungselementen, die für Schraub- und/oder Nietverbindungen verwendet werden. Die in die Kunststoffmatrix eingebetteten Faserstrukturen und Faserwerkstoffe weisen jedoch gegenüber der Kunststoffmatrix eine deutlich höhere Druckfestigkeit auf.

Bildet man nun in dem hochbelasteten Randbereich eine verdichtete Faserstruktur aus, so dass die vorhandene Kunststoffmatrix mit einem höheren Faseranteil versehen ist, so kann man in diesem kritischen Bereich die Druckfestigkeit und damit die Belastbarkeit in der maßgeblichen Zone deutlich erhöhen, und zwar ohne dass zusätzliche lastverteilende Elemente (Unterlegscheiben, Buchsenanordnungen mit erhöhten Lastübertragungsflächen) erforderlich wären.

Die verdichtete Faserstruktur kann entweder durch eine lokale Erhöhung des relativen Faseranteils im Randbereich der Fügeöffnung realisiert werden, oder durch eine relative Verringerung des Kunststoffmatrixmaterials in diesem Bereich.

### KURZBESCHREIBUNG DER ZEICHNUNG

Ausführungsformen der Erfindung werden nun beispielhaft und unter Bezugnahme auf die beigefügte Zeichnung beschrieben darin zeigt:
- Fig. 1: einen ersten Verfahrensschritt zur Herstellung einer ersten Ausführungsform eines erfindungsgemäßen FKV-Bauteils in einer Schnittdarstellung;
- Fig. 2: Detail A aus Fig. 1;
- Fig. 3: einen zweiten Verfahrensschritt zur Herstellung einer ersten Ausführungsform eines erfindungsgemäßen FKV-Bauteils;
- Fig. 4: einen dritten Verfahrensschritt zur Herstellung einer ersten Ausführungsform eines erfindungsgemäßen FKV-Bauteils;
- Fig. 5: eine Schnittdarstellung einer Befestigungsanordnung, bei dem ein erfindungsgemäßes FKV-Bauteil mittels einer Schraubverbindung an einem Gegenstück fixiert ist;
- Fig. 6: Detail B aus Fig. 5;
- Fig. 7: eine zweite Ausführungsform eines erfindungsgemäßen FKV-Bauteils in einer Draufsicht

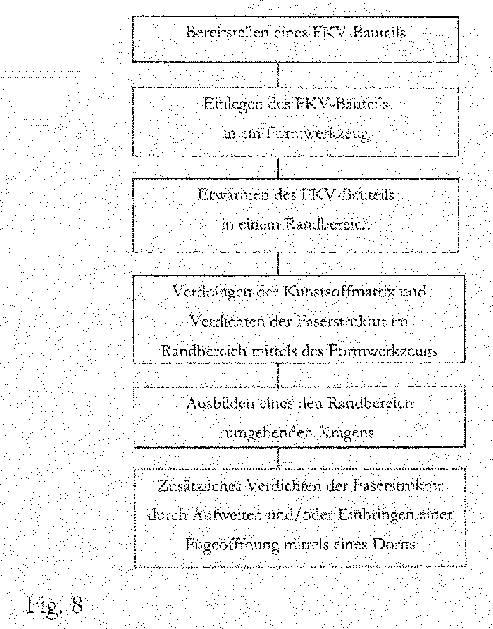

- Fig. 8: eine schematische Darstellung eines Verfahrens zur Herstellung eines erfindungsgemäßen FKV-Bauteils.

### BESCHREIBUNG VON AUSFÜHRUNGSFORMEN

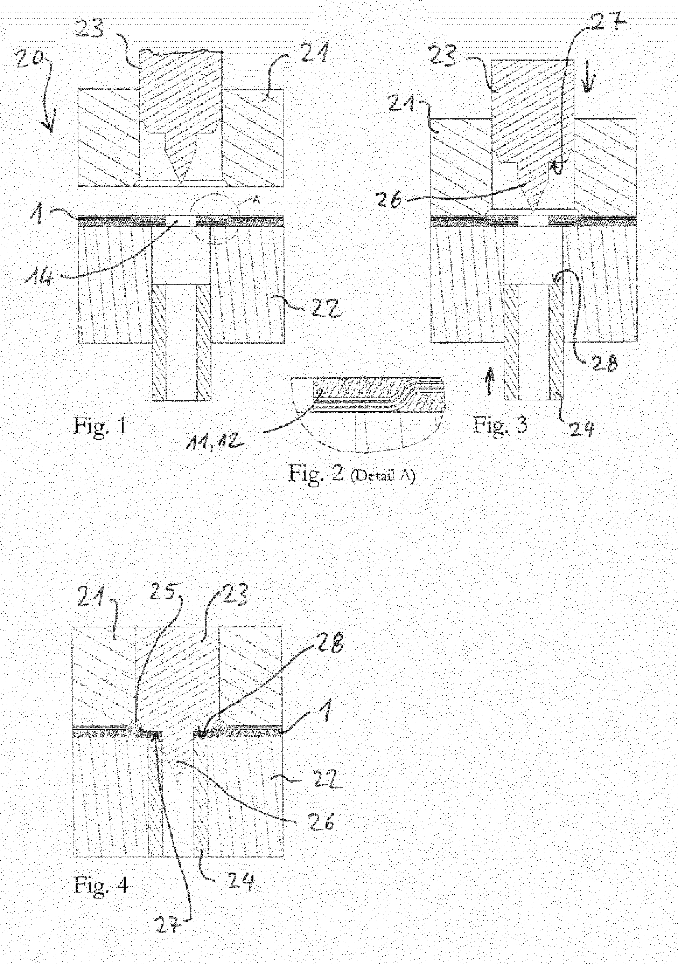

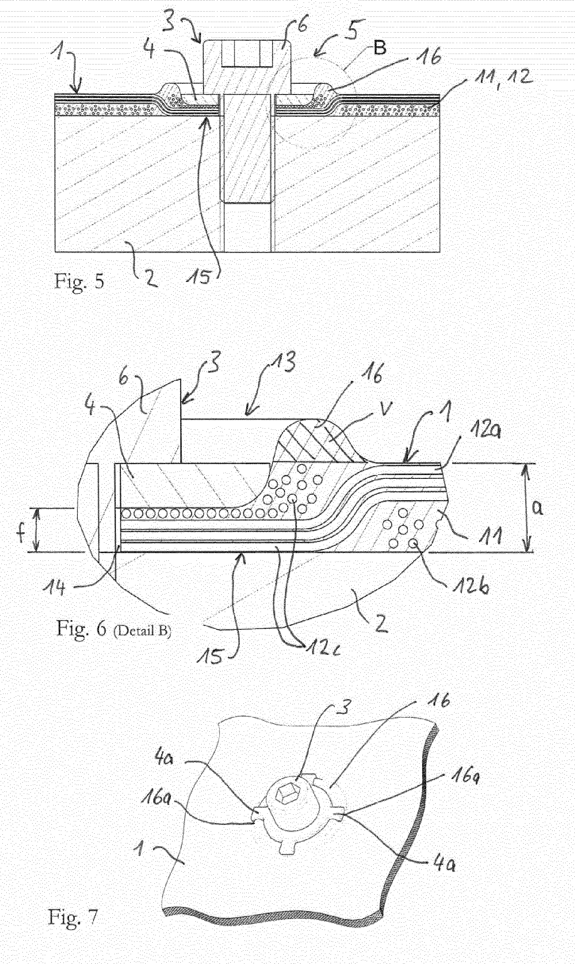

In Fig. 5 und 6 ist eine erste Ausführungsform eines erfindungsgemäßen FKV-Bauteils veranschaulicht. Die Figuren 1 bis 4 illustrieren Verfahrensschritte zu deren Herstellung. Vor einer detaillierten Beschreibung folgen zunächst allgemeine Erläuterungen zu den Ausführungsformen der Offenbarung.

Es gibt Ausführungen, bei denen das FKV-Bauteil eine Ausgangswandstärke aufweist und der Randbereich um die Fügeöffnung eine davon abweichende Formwandstärke, wobei diese Formwandstärke geringer - also dünner - ist als die Ausgangswandstärke. Bei dieser Ausführung kann die verdichtete Faserstruktur im Bereich der verringerten Formwandstärke ausgebildet werden, indem bei der Herstellung des FKV-Bauteils im Randbereich der Fügeöffnung oder im Bereich, der für eine nachträglich einzubringende Fügeöffnung vorgesehen ist, die Wanddicke des FKV-Bauteils dünner ausgebildet wird. Das bedeutet, dass hier der Anteil des Kunststoffmatrixmaterials reduziert ist und so die Faserstruktur in diesem Bereich verdichtet wird. Bei solchen FKV-Bauteilen sind dann entsprechend der geplanten Anordnung der Fügeöffnungen bereichsweise verdichtet Faserstrukturen ausgebildet.

Bei einer Ausführung, bei welcher der Kragen nur auf einer Seite des FKV-Bauteils ausgebildet ist, kann das FKV-Bauteil mit seiner anderen Seite flächenbündig im Bereich der Fügeöffnung beziehungsweise des Randbereiches mit einem Gegenstück gekoppelt werden, so dass hier gegebenenfalls ein zusätzliches Fügeverfahren wie Verkleben ausgeführt werden kann.

Bei einer anderen Ausführung weist der Kragen radiale, in Umfangsrichtung beabstandete Unterbrechungen oder Einformungen auf, die zur formschlüssigen Kopplung mit entsprechenden Ausbildungen (Nasen) an einem Lastübertragungsmittels geeignet sind. Diese Ausführung erlaubt es, beispielsweise lastverteilende Unterlegscheiben nicht nur innerhalb des Kragens zu zentrieren, sondern diese auch formschlüssig in Umfangsrichtung zu fixieren. So kann zuverlässig verhindert werden, dass beim drehenden Fixieren eines Verbindungsmittels (beispielsweise beim Einschrauben) im Randbereich zwischen dem Verbindungsmittel (zum Beispiel dem Schraubenkopf) und dem FKV-Bauteil Reibbeanspruchungen auftreten. Die Reibbeanspruchung findet nur zwischen dem Lastübertragungsmittel und dem eigentlichen Verbindungsmittel statt, also beispielsweise zwischen Schraubenkopf und Unterlegscheibe.

Bei einer Ausführung, bei welcher das FKV-Bauteil aus einem plattenförmigen Organoblech Halbzeug mit thermoplastischer Kunststoffmatrix ausgebildet ist, ist die Gestaltung der Fügeöffnung des Randbereichs mit verdichteter Faserstruktur und auch des Kragens durch besonders gut kontrollierbare thermisch-mechanische Bearbeitungsverfahren herstellbar. So kann beispielsweise der Bereich der Fügeöffnung lokal erwärmt werden, dabei wird die Kunststoffmatrix plastifiziert und der Randbereich mit verdichteter Faserstruktur kann mit einem einfachen Pressvorgang ausgebildet werden. Das gleiche gilt für den Kragen und sogar für die Fügeöffnung selbst. Die Fügeöffnung braucht nicht durch einen mechanisch-spanenden Bohrvorgang hergestellt werden. Sondern sie kann mittels eines Dorns hergestellt werden, der das thermisch plastifizierte FKV-Bauteil durchstößt und dabei die Faserstruktur, ohne diese zu verletzen, durchsetzt, indem der Dorn die dort vorhandenen Fasern (beispielsweise ein Gelege, ein Gewebe oder auch ein Gewirk) in der plastifizierten Matrix beiseiteschiebt und so die Fasern im Randbereich zusätzlich verdichtet.

Die Offenbarung betrifft weiterhin Fügeanordnungen oder auch Vorrichtungen zur Krafteinleitung, bei welchen zwei Bauteile mit einem die Fügeöffnung eines erfindungsgemäßen FKV-Bauteils durchsetzenden Verbindungsmittel mit einem zweiten Bauteil verbunden werden oder über Verbindungsmittel Lastangriffspunkte am FKV-Bauteil realisiert werden.

Solche Fügeanordnungen sind insbesondere für hybride Verbindungen einsetzbar, bei denen Bauteile mit völlig unterschiedlichen Werkstoffen miteinander verbunden werden, also beispielsweise Bauteile aus FKV-Werkstoffen und Metallkomponenten.

Bei einer weiteren Ausführung wird dazu ein beispielsweise ein als Unterlegscheibe ausgebildetes Lastübertragungsmittel verwendet, das die über das Verbindungsmittel in das FKV-Bauteil eingebrachten Lasten gleichmäßig und gegebenenfalls weiter nach außen in den Randbereich verteilt. Damit lassen sich die zu übertragenden Lasten pro Fügeöffnung beziehungsweise pro Randbereich erhöhen.

Ein erfindungsgemäßes Verfahren zur Herstellung eines erfindungsgemäßen FKV-Bauteils umfasst:
- Bereitstellen eines FKV-Bauteils,
- Einlegen des FKV-Bauteils in ein Formwerkzeug,
- Erwärmen des FKV-Bauteils im Randbereich und/oder im Bereich der Fügeöffnung,
- Verdrängen der Kunststoffmatrix und Verdichten der Faserstruktur im Randbereich mittels eines Formwerkzeugs und
- Ausbilden eines den Randbereich umgebenden Kragens.

Bei einer Weiterentwicklung des Verfahrens umfasst dieses zusätzlich und/oder optional das zusätzliche Verdichten der Faserstruktur durch Aufweiten und/oder Einbringen einer Fügeöffnung (Lochung), bei welcher insbesondere die einzelnen Fasern der Faserstruktur unverletzt bleiben.

Zunächst zurückkommend zu den Fig. 5 und 6 zeigen diese in einer Schnittdarstellung ein Ausführungsbeispiel eines FKV-Bauteils 1, das zusammen mit einem Anschlussbauteil 2 und einem aus einer Innensechskantschraube 3 und einer Unterlegscheibe 4 gebildeten Verbindungsmittel eine Fügeanordnung 5 bildet.

Die Struktur des FKV-Bauteils 1 wird anhand der Fig. 6 erläutert, die das Detail B aus Fig. 5 zeigt. Das plattenförmige FKV-Bauteil 1 wird aus einer Kunststoffmatrix 11 (schraffierte Bereiche) und einer Faserstruktur 12 gebildet die kreuzweise übereinander verlaufende Faserlagen 12a und 12b umfasst.

In alternativen Ausführungen kann die Faserstruktur 12 auch aus verwebten Fasern beziehungsweise -strängen gebildet werden oder aber auch aus einem Faservlies oder verwirkten Fasern.

Die Kunststoffmatrix 11 wird vorzugsweise aus einem thermoplastischen Kunststoff mit oder ohne weiteren Füllstoffen gebildet. Das FKV-Bauteil 1 ist als sogenanntes Organoblechbauteil ausgebildet.

Der Fügebereich 13 umfasst eine als Bohrung 14 ausgeführte Fügeöffnung und einen die Bohrung 14 umgebenden Randbereich 15, der von einem wulstartigen Kragen 16 umgeben ist. Im Randbereich 15 ist die Faserstruktur 12 verdichtet, das heißt, das Verhältnis aus Kunststoffmatrix 11 und Faserstruktur 12 ist zugunsten der Faserstruktur 12c verschoben. Damit stützen sich die Faserlagen 12a und 12b direkt gegeneinander und nicht nur innerhalb der Matrix 11 ab. Das bedeutet, dass über die Unterlegscheibe 4 vom Schraubenkopf 6 übertragene Druckkräfte weitgehend über die relativ feste und dicht gepackte Faserstruktur 12c auf das Anschlussbauteil 2 übertragen werden. Die vergleichsweise weiche und fließgefährdete Kunststoffmatrix 11 bleibt dabei weitgehend unbelastet.

Der Kragen 16 zentriert die Unterlegscheibe 4 innerhalb des Randbereichs 15. Bei der Herstellung wird die erwärmte Kunststoffmatrix 11 plastisch verformt (siehe unten), so dass Matrixmaterial aus dem Randbereich 15 seitlich herausgedrückt wird und den wulstartige Kragen 16 bildet. Dabei entsteht im Randbereich 15 eine reduzierte Formwandstärke f die unter der Ausgangswandstärke a liegt, die das FVK-Bauteil 1 in dem den Kragen 16 umgebenden Bereich aufweist. Das verdrängte Matrixvolumen im Randbereich 15 entspricht dem in den Kragen 16 hineingedrückten Volumen V. Optional kann auch im Kragen 16 selbst eine verdichtete Faserstruktur 12c ausgebildet sein, die dadurch entsteht, dass beim Einprägen des Randbereichs 15 Fasern 12a, 12b in den Kragen 16 verschoben werden.

Fig. 7 zeigt eine Ausführungsform in einer Draufsicht, bei welcher der Kragen 16 mit Unterbrechungen 16a versehen ist, in welche die Nasen 4a einer Unterlegscheibe 4 eingreifen, so dass diese formschlüssig in Umfangsrichtung festgelegt ist. Damit wird wirksam verhindert, dass die Unterseite der Unterlegscheibe 4 beim Eindrehen der Schraube 3 mitgenommen wird und im Randbereich auf der Oberfläche des FKV-Bauteils 1 reibt und dabei unter Umständen die Faserstruktur 12 und/oder die Kunststoffmatrix 11 beschädigt oder zerstört.

Ein Fertigungsverfahren zur Herstellung des dargestellten FKV-Bauteils 1 wird anhand der Fig. 1 bis 4 erläutert.

Das FKV-Bauteil 1 wird mit eingebrachter Bohrungen 14 in eine Werkzeuganordnung 20 eingelegt und wenigstens lokal im Bereich A erwärmt. Die Werkzeuganordnung 20 wird geschlossen. Dabei wird das FKV-Bauteil 1 zwischen einer ersten und zweiten Arretierung 21, 22 eingespannt und fixiert (Fig. 3).

Erste und zweite Arretierung 21 und 22 sind hier als Haltezylinder ausgebildet. Innerhalb der ersten Arretierung 21 ist ein verschieblicher Formstempel 23 angeordnet, der mit einer in der zweiten Arretierung 22 verlaufenden Gegenhülse 24 zusammenwirkt.

Formstempel 23 und Gegenhülse 24 werden jeweils in Pfeilrichtung zueinander bewegt, so dass sie die in Fig. 4 gezeigte Stellung einnehmen. Dabei durchsetzt ein am Formstempel 23 ausgebildeter Dorn 26 die Bohrung 14. Die Stirnfläche 27 des Formstempels 23 verdrängt dabei die Kunststoffmatrix 11 in eine teilweise am Formstempel 23 und teilweise an der ersten Arretierung 21 ausgebildete Ringnut 25. Die Stirnfläche 27 des Formstempels 23 stützt sich dabei gegen die Stirnfläche 28 der Gegenhülse 24 ab und der Dorn 26 ragt in die Gegenhülse 24 hinein und wird dort zentriert. Dabei wird die Kunststoffmatrix 11 weiter aus der Faserstruktur 12 verdrängt und die Faserstruktur 12 wird soweit verdichtet, dass sie ausgehend von der in Fig. 2 dargestellten Anordnung in die in Fig. 6 dargestellte Gestalt gebracht wird.

Das FKV-Bauteil 1 wird entnommen, indem die Werkzeuganordnung 20 getrennt wird, indem die erste Arretierung 21 und der Formstempel 23 sowie die zweite Arretierung 22 und die Gegenhülse 24 wieder in die in Fig. 1 gezeigte Stellung gebracht werden. Das FKV-Bauteil kann nach dem Abkühlen und verfestigen der Matrix 11 weiter verarbeitet werden und beispielsweise als Bestandteil einer Fügeanordnung 5 verwendet werden (vgl. Fig. 5 bis 7). Das oben beschriebene Verfahren ist für ein FKV-Bauteil beschrieben, bei welcher die Fügeöffnung als Bohrung 14 vor dem Ausformen des Randbereichs 15 und des Kragens 16 angebracht wurde.

In einem alternativen Verfahren kann der Dorn 28 auch verwendet werden, um die Fügeöffnung 14 selbst auszubilden. Dabei wird ein ungelochtes FKV-Bauteil 1 in die Werkzeuganordnung 20 eingesetzt und erwärmt. Beim Schließen des Werkzeuges 20 wird der gegebenenfalls erwärmte Dorn 26 durch die Kunststoffmatrix 11 und die Faserstruktur 12 geschoben. Dabei schiebt der schlanke kegelige Dorn 26 die Faserlagen 12a und 12b auseinander ohne dabei die Fasern selbst zu zerstören und verdrängt die Kunststoffmatrix 11 in den entstehenden Randbereich 15, wo dann anschließend die Kunststoffmatrix 11 und die Faserstruktur 12 weiter zwischen den Stirnflächen 26 und 27 verdrängt beziehungsweise weiter verdichtet werden. Durch das zusätzlich zur Verfügung stehende Material aus der gebildeten Fügeöffnung 14 kann bei dieser Ausführung auch der Randbereich 15 die gleiche Wanddicke aufweisen wie das übrige Bauteil 1 und trotzdem eine relativ zur vorhandenen Kunststoffmatrix 11 verdichtete Faserstruktur 12c aufweisen. Das Volumen des Kragens 16 entspricht dann etwa dem vom Dorn 26 verdrängten Material (Kunststoffmatrix 11 und Faserlagen 12a, 12b) die in den Kragen 16 hinein verschoben wurden.

In einer weiteren Ausführung kann der Randbereich 15 auch ohne bereits vorhandene Bohrung 14 beziehungsweise ohne Fügeöffnung ausgebildet werden. Bei so einem Verfahren ist der Formstempel 23 ohne Dorn 26 ausgebildet und die Gegenhülse 14 ist ebenfalls als geschlossener Stempel ausgebildet oder auch in die zweite Arretierung 22 integriert. Bei so einem Verfahren wird dann lediglich durch Zusammenpressen des Formstempels 23 und des Gegenstempels der Randbereich 15 ausgebildet (eingeprägt), dabei wird die Faserstruktur 12 verdichtet und das Matrixmaterial der Kunststoffmatrix 11 wird in den Kragen 16 hinein verschoben.

Die Fügeöffnung beziehungsweise die Bohrung 14 kann dann bedarfsweise in einem nachfolgenden Arbeitsgang eingebracht (thermisch und/oder mechanisch) werden.

Weitere Varianten und Ausführungen der vorliegenden Erfindung ergeben sich für den Fachmann im Rahmen der Ansprüche.

### LISTE DER BEZUGSZEICHEN

- 1: FKV-Bauteil
- 2: Anschlussbauteil
- 3: Innensechskantschraube
- 4: Unterlegscheibe
- 4a: Nase
- 5: Fügeanordnung
- 6: Schraubenkopf
- 11: Kunststoffmatrix
- 12: Faserstruktur
- 12a: Faserlage (längs)
- 12b: Faserlage (quer)
- 12c: verdichtete Faserstruktur
- 13: Fügebereich
- 14: Bohrung (Fügeöffnung)
- 15: Randbereich
- 16: Kragen
- 16a: Ausnehmung
- 20: Werkzeuganordnung
- 21: erste Arretierung
- 22: zweite Arretierung
- 23: Formstempel
- 24: Gegenhülse
- 25: Ringnut
- 26: Dorn
- 27: Stirnfläche Formstempel
- 28: Stirnfläche Gegenhülse

## Patentansprüche

1. Faserkunststoffverbund (FKV) -bauteil (1) mit einer Kunststoffmatrix (11) und einer darin eingebetteten Faserstruktur (12) und einer Fügeöffnung (14) zur Aufnahme eines das Faserkunststoffverbundbauteil durchsetzenden Verbindungsmittels (3), wobei
in einem die Fügeöffnung (14) umgebenden Randbereich (15) in der Kunststoffmatrix (11) eine verdichtete Faserstruktur (12c) ausgebildet ist, um den Randbereich (15) ein wulstartiger Kragen (16) ausgebildet ist,
wobei bei der Herstellung die erwärmte Kunststoffmatrix (11) plastisch verformt wird, so dass Matrixmaterial aus dem Randbereich (15) seitlich herausgedrückt wird und den wulstartigen Kragen (16) bildet,
dabei im Randbereich (15) eine reduzierte Formwandstärke (f) entsteht, die unter der Ausgangswandstärke (a) liegt, die in dem den Kragen (16) umgebenden Bereich des FVK-Bauteils (1) ausgebildet ist und
ein in den Kragen (16) hineingedrücktes Volumen (V) einem verdrängten Matrixvolumen im Randbereich (15) entspricht, sodass im Randbereich (15) ein erhöhtes Lastaufnahmevermögen ausgebildet ist.

2. FKV-Bauteil (1) nach Anspruch 1, wobei der Kragen (16) nur auf einer Seite des FKV-Bauteils (1) ausgebildet ist.

3. FKV-Bauteil (1) nach Anspruch 1 oder 2, wobei der Kragen (16) in Umfangsrichtung Unterbrechungen (16a) aufweist, die zur formschlüssigen Kopplung mit entsprechenden Ausbildungen (4a) eines Lastübertragungsmittels (4) geeignet sind.

4. FKV-Bauteil (1) nach einem der vorhergehenden Ansprüche, das aus einem, insbesondere plattenförmigen, Organoblechhalbzeug mit thermoplastischer Kunststoffmatrix (11) ausgebildet ist.

5. Fügeanordnung (5) mit einem ersten Bauteil, das als FKV-Bauteil (1) nach einem der vorhergehenden Ansprüche ausgebildet ist, einem zweiten Bauteil (2) und einem eine in dem FKV-Bauteil (1) ausgebildete Fügeöffnung (14) durchsetzenden Verbindungsmittel (3), welches das erste und zweite Bauteil (1, 2) miteinander verbindet.

6. Fügeanordnung (5) nach Anspruch 5, wobei das Verbindungsmittel (3) ein Lastübertragungsmittel (4), insbesondere eine Unterlegscheibe, umfasst, das in einem Randbereich (15) aufliegt, und über das Verbindungsmittel (3) in das FKV-Bauteil (1) eingebrachte Lasten auf den Randbereich (15) verteilt.

7. Verfahren zur Herstellung eines FKV-Bauteils (1) nach einem der Ansprüche 1 bis 6 mit:
Bereitstellen eines FKV-Bauteils (1);
Einlegen des FKV-Bauteils (1) in ein Formwerkzeug (20);
Erwärmen des FKV-Bauteils in einem Randbereich (15);
Verdrängen der Kunststoffmatrix (11) und Verdichten der Faserstruktur (12; 12c) im Randbereich (15) mittels des Formwerkzeugs (20) und
Ausbilden eines den Randbereich (15) umgebenden Kragens (16).

8. Verfahren nach Anspruch 7, zusätzlich aufweisend:
Zusätzliches Verdichten der Faserstruktur (12; 12c) durch Aufweiten und/oder Einbringen einer Fügeöffnung (14) mittels eines Dorns (26).

## Claims

1. A fiber plastics composite (FKV) component (1) having a plastics matrix (11) and a fiber structure (12) embedded therein and a joining opening (14) for receiving a connecting member (3) which passes through the fiber plastics composite component, wherein
a compacted fiber structure (12c) is formed in an edge region (15) surrounding the joining opening (14) in the plastics matrix (11), a bead-like collar (16) is formed around the edge region (15),
wherein the heated plastics matrix (11) is plastically deformed during production, so that matrix material is laterally pressed out of the edge region (15) and forms the bead-like collar (16),
a reduced mold wall thickness (f) is thereby produced in the edge region (15), which is less than the initial wall thickness (a) that is formed in the region of the FVK component (1) surrounding the collar (16), and
a volume (V) pressed into the collar (16) corresponds to a displaced matrix volume in the edge region (15), so that an increased load-bearing capacity is created in the edge region (15).

2. The FKV component (1) according to claim 1, wherein the collar (16) is only formed on one side of the FKV component (1).

3. The FKV component (1) according to claim 1 or 2, wherein in the circumferential direction the collar (16) has discontinuities (16a) which are suitable for the interlocking coupling with corresponding formations (4a) of a load transfer member (4).

4. The FKV component (1) according to any of the preceding claims, which is formed from a, particularly plate-shaped, semi-finished organosheet product with a thermoplastic plastics matrix (11).

5. A joining assembly (5) comprising a first component which is designed as an FKV component (1) according to any of the preceding claims, a second component (2) and a connecting member (3), which passes through a joining opening (14) formed in the FKV component (1) and which connects the first and second components (1, 2) to one another.

6. The joining assembly (5) according to claim 5, wherein the connecting member (3) comprises a load transfer member (4), in particular a washer, which rests in an edge region (15), and distributes loads introduced into the FKV component (1) via the connecting member (3) over the edge region (15).

7. A method for producing an FKV component (1) according to any of claims 1 to 6, comprising:
providing an FKV component (1);
inserting the FKV component (1) into molding tool (20);
heating the FKV component in an edge area (15);
displacing the plastics matrix (11) and compacting the fiber structure (12; 12c) in the edge region (15) by means of the molding tool (20), and
forming a collar (16) surrounding the edge region (15).

8. The method according to claim 7, additionally including:
additional compaction of the fiber structure (12; 12c) by expanding and/or introducing a joining opening (14) by means of a mandrel (26).

## Revendications

1. Composant en plastique renforcé de fibres (PRF) (1) comprenant une matrice en matière plastique (11) et une structure de fibres (12) noyée dans celle-ci, et une ouverture de jonction (14) destinée à recevoir un moyen de liaison (3) traversant le composant en plastique renforcé de fibres (1), dans lequel
dans une zone périphérique (15) entourant l'ouverture de jonction (14) dans la matrice en matière plastique (11) est formée une structure de fibres densifiée (12c), autour de la zone périphérique (15) est formée une collerette en forme de bourrelet (16),
la matrice en matière plastique (11) réchauffée étant soumise à une déformation plastique durant la fabrication, de manière à ce que le matériau de matrice est chassé latéralement hors de la zone périphérique (15) pour former la collerette en forme de bourrelet (16),
résultant, dans la zone périphérique (15), en une épaisseur de paroi de moule (f) réduite étant inférieure à l'épaisseur de paroi initiale (a) formée dans la partie du composant PRF (1) entourant la collerette (16), et
un volume (V) poussé à l'intérieur de la collerette (16) correspond à un volume de matrice chassé dans la zone périphérique (15), de manière à ce que dans la zone périphérique (15) est réalisée une capacité d'absorption de charge augmentée.

2. Composant PRF (1) selon la revendication 1, dans lequel la collerette (16) est formée que d'un côté du composant PRF.

3. Composant PRF (1) selon la revendication 1 ou 2, dans lequel la collerette (16) présente des interruptions (16a) dans la direction circonférentielle, lesquelles sont adaptées à être raccordées par coopération de formes à des conformations (4a) appropriées d'un moyen de transfert de charge (4).

4. Composant PRF (1) selon l'une des revendications précédentes, lequel est formé d'un produit semi-fini en tôle organique avec une matrice en matière plastique (11) thermoplastique, en particulier en forme de plaque.

5. Agencement de jonction (5) comprenant un premier composant sous forme de composant PRF (1) selon l'une des revendications précédentes, un second composant (2) et un moyen de liaison (3) traversant une ouverture de jonction (14) formée dans le composant PRF (1), lequel relie le premier et le second composant (1, 2) entre eux.

6. Agencement de jonction (5) selon la revendication 5, dans lequel le moyen de liaison (3) comprend un moyen de transfert de charge (4), en particulier une rondelle, lequel est en appui dans une zone périphérique (15) et réparti des charges introduites dans le composant PRF (1) via le moyen de liaison (3) sur la zone périphérique (15).

7. Procédé de fabrication d'un composant PRF (1) selon l'une des revendications 1 à 6 comprenant :
mise à disposition d'un composant PRF (1) ;
insertion du composant PRF (1) dans un outil de formage (20) ;
chauffage du composant PRF (1) dans une zone périphérique (15) ;
éloignement de la matrice en matière plastique (11) et densification de la structure de fibres (12 ; 12c) dans la zone périphérique (15) au moyen de l'outil de formage (20) et
formation d'une collerette (16) entourant la zone périphérique (15).

8. Procédé selon la revendication 7, comprenant en outre :
densification supplémentaire de la structure de fibres (12 ; 12c) par élargissement et/ou introduction d'une ouverture de jonction (14) au moyen d'un mandrin (26).
